# EUROPÄISCHE PATENTSCHRIFT

(11) **EP 4 211 004 B1**
(45) Veröffentlichungstag und Bekanntmachung des Hinweises auf die Patenterteilung: **06.05.2026**
(21) Anmeldenummer: 21772711.4
(22) Anmeldetag: 30.08.2021
(51) Int. Cl.: B60R 22/34, B60R 22/46

(54) **GURTAUFROLLER**
BELT RETRACTOR
RÉTRACTEUR DE CEINTURE

(30) Priorität: 07.09.2020 DE 102020211209
(43) Veröffentlichungstag der Anmeldung: 19.07.2023
(73) Patentinhaber: Autoliv Development AB, 447 83 Vårgårda (SE)
(72) Erfinder: BUD, Adrian, 51631 Dalsjöfors (SE); SÖHNCHEN, Arndt, 22765 Hamburg (DE); PETTERSSON, Lennart, 44734 Vargarda (SE); JABUSCH, Ronald, Elmshorn 25336 (DE); LANGHOFF, Hans-Jörg, 25474 Bönningstedt (DE); GLAESSER, Antto-Christian, 25474 Hasloh (DE); CIRSTEA, Alexandru, 25335 Elmshorn (DE); MATHIASSON, Elias, 44192 Alingsas (SE); EHLERS, Jens, 25358 Horst (DE); LARSSON, Janne, 44170 Sollebrunn (SE); AXBLOM, Per, 44157 Alingsas (SE)
(74) Vertreter: Müller Verweyen
(86) Internationale Anmeldenummer: PCT/EP2021/073832
(87) Internationale Veröffentlichungsnummer: WO 2022/049015

(56) Entgegenhaltungen:
- DE-A1- 102018 213 282

## Beschreibung

Die vorliegende Erfindung betrifft einen Gurtaufroller mit den Merkmalen des Oberbegriffs von Anspruch 1.

Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung des Gurtaufrollers an einer Sitzstruktur oder an einer Fahrzeugstruktur und ist dafür aus einem entsprechend dicken Stahlblech hergestellt, welches zu einem U-förmigen Rahmen gebogen ist.

Ferner sind moderne Gurtaufroller zur Reduzierung der Insassenbelastung mit Kraftbegrenzungseinrichtungen versehen, welche im Unfall einen kraftbegrenzten Gurtbandauszug ermöglichen, bis der Insasse z.B. von einem Airbag aufgefangen wird. Dazu haben sich plastisch verformbare Torsionsstäbe bewährt, welche mit einem Ende drehfest mit der Gurtspule und mit dem anderen Ende mit einem im Unfall fahrzeugfest über eine erste Blockiereinrichtung blockierbaren Teil (Profilkopf) verbunden sind. Das Kraftbegrenzungsniveau des kraftbegrenzten Gurtbandauszuges ist bei einem solchen Torsionsstab durch seine plastische Verformungsgrenze vorgegeben.

Aus der Druckschrift DE 199 27 427 A1 ist ein Gurtaufroller bekannt, welcher einen zweistufigen Torsionsstab mit zwei Torsionsabschnitten mit unterschiedlichen plastischen Verformungsgrenzen aufweist. Der zweistufige Torsionsstab ist mit dem freien Ende, welches das Ende des Torsionsabschnittes mit dem höheren Kraftbegrenzungsniveau bildet, drehfest mit dem Profilkopf verbunden. Das andere freie Ende ist drehfest mit der Gurtspule verbunden. Ferner ist eine schaltbare zweite Blockiereinrichtung mit einem Drehmomentrohr vorgesehen, wobei das Drehmomentrohr in einem profilierten Mittenabschnitt mit einem Profil des Torsionsstabes verbundenen ist, welches die beiden Torsionsabschnitte voneinander trennt. Ferner umfasst die schaltbare zweite Blockiereinrichtung zwei lösbare Blockierklinken, welche das Drehmomentrohr gegenüber dem Rahmen des Gurtaufrollers blockieren. Damit ist der Torsionsabschnitt mit der niedrigeren plastischen Verformungsgrenze also mit dem niedrigeren Kraftbegrenzungsniveau zu Beginn des kraftbegrenzten Gurtbandauszuges überbrückt, und der kraftbegrenzte Gurtbandauszug wird durch eine plastische Verformung des Torsionsabschnittes mit der höheren plastischen Verformungsgrenze auf einem höheren Kraftbegrenzungsniveau ermöglicht. Bei einer Schaltung der zweiten Blockiereinrichtung wird die Blockierung des Drehmomentrohres aufgehoben, und der weitere kraftbegrenzte Gurtbandauszug wird durch eine plastische Verformung des Torsionsabschnittes mit der niedrigeren plastischen Verformungsgrenze auf dem niedrigeren Kraftbegrenzungsniveau ermöglicht. Der zweistufige Torsionsstab ist zusammen mit dem Drehmomentrohr in einem Hohlraum der Gurtspule angeordnet, wodurch eine Gurtspule mit einem entsprechend großen Hohlraum und einem entsprechend großen Außendurchmesser vorgesehen werden muss.

Ferner ist es bekannt, Fahrzeugsitze mit integrierten Sicherheitsgurteinrichtungen zu versehen, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden müssen. Die Gurtaufroller selbst weisen alle Grundbauteile eines Standardgurtaufrollers auf und werden nur mit verschiedenen, speziell für den Einbau in die Rückenlehne vorgesehenen Zusatzbaugruppen, wie z.B. einem sich selbst ausrichtenden Trägheitssensor versehen. Der Einbau in die Rückenlehnen ist dabei insofern problematisch, da der zur Verfügung stehende Bauraum sehr klein ist, und die Rückenlehnen zu dem Einbau nicht beliebig vergrößert und in ihrer Grundstruktur nicht beliebig verändert werden können. Dabei ist die Struktur der Rückenlehnen insbesondere zur Aufnahme der Rückhaltekräfte im Unfall mit einem Fachwerk aus Streben ausgebildet, welche eine möglichst steife Struktur bei einem möglichst geringem Eigengeweicht bilden sollen. Aus dieser Anforderung heraus ergibt sich zwangsläufig eine nur begrenzt veränderbare Struktur mit langen möglichst durchgängigen Streben, welche den Innenraum der Rückenlehne in mehrere, längliche Freiräume unterteilen. DE102018213282A zeigt einen Gurtaufroller gemäß dem Oberbegriff des Anspruchs 1.

Damit ergibt sich bei Gurtaufrollern, insbesondere dann, wenn sie zum Eibau in Rückenlehnen vorgesehen sind, das Problem, dass sie möglichst kompakt ausgeführt und insbesondere auch zum Einbau in sehr schmalen und länglichen Bauräumen ausgebildet sein müssen.

Zur Lösung der Aufgabe wird ein Gurtaufroller mit den Merkmalen von Anspruch 1 vorgeschlagen. Weitere bevorzugte Ausführungsformen sind den Unteransprüchen, den Figuren und der zugehörigen Beschreibung zu entnehmen.

Gemäß dem Grundgedanken der Erfindung wird vorgeschlagen, dass die Gurtspule, der erste Torsionsstab und der Profilkopf koaxial und in Reihe zueinander angeordnet sind.

Durch die vorgeschlagene Lösung kann ein länglicher, schmaler Grundaufbau des Gurtaufrollers verwirklicht werden. Dabei ist der erste Torsionsstab gegenüber der aus dem Stand der Technik bekannten Lösung aus der Gurtspule heraus verlegt und koaxial zu der Gurtspule angeordnet, so dass die Gurtspule in ihrem Außendurchmesser kleiner ausgelegt werden kann, da der bisher erforderliche Hohlraum in der Gurtspule zur Anordnung des Torsionsstabes entfällt. Ferner ist der über die erste Blockiereinrichtung fahrzeugfest blockierbare Profilkopf ebenfalls koaxial und in Reihe zu der Gurtspule angeordnet, so dass der Profilkopf ebenfalls von der Gurtspule gelöst ist. Damit kann die Gurtspule auch aus diesem Grund kleiner bemessen werden, da der Profilkopf nicht mehr unmittelbar an dieser angeordnet ist. Ferner wird durch die koaxiale Reihenanordnung der drei Grundbauteile ein sehr schmaler und länglicher Grundaufbau des Gurtaufrollers ermöglicht, so dass er einfacher in bereits vorhandene schmale und längliche Bauräume der Rückenlehne oder der Fahrzeugstruktur angeordnet werden kann. Sofern die vorhandenen Bauräume nicht ausreichen, können diese aber auch geringfügig verändert und angepasst werden.

Dabei ist der erste Torsionsstab bevorzugt in Reihe zwischen der Gurtspule und dem Profilkopf angeordnet. Der erste Torsionsstab bildet praktisch die Verbindung zwischen dem Profilkopf und der Gurtspule. Bei einer Blockierung des Profilkopfes wird das zweite Ende des ersten Torsionsstabes blockiert, und das erste Ende des ersten Torsionsstabes kann zusammen mit der Gurtspule unter einer plastischen Verformung des zwischen dem ersten und dem zweiten Ende angeordneten Abschnittes des ersten Torsionsstabes gegenüber dem blockierten Profilkopf drehen. Damit ergibt sich ein einfacher und klarer Grundaufbau mit einem möglichst geradlinigen Kraftfluss, so dass der Gurtaufroller für die aufzunehmenden Rückhaltekräfte sehr kompakt ausgeführt werden kann.

Weiter wird vorgeschlagen, dass der Profilkopf und die Gurtspule in einem axialen Abstand zueinander in separaten Radiallagerungen gelagert sind. In der bisherigen Anordnung des Profilkopfes an der Gurtspule hat dieser gleichzeitig das Radiallager der Gurtspule gebildet, wobei die Anordnung des Torsionsstabes und die Radiallagerung der Gurtspule in dem Profilkopf einen vergleichsweise großen Außendurchmesser der Gurtspule zur Folge hatten.

Durch die vorgeschlagene getrennte Radiallagerung kann die Lagerung der Gurtspule einfacher und damit bauraumoptimierter verwirklicht werden. Außerdem kann die Lagerung aufgrund der vorgesehenen zwei Lager und des axialen Abstandes der Radiallagerungen insgesamt stabiler verwirklicht werden.

Der erste Torsionsstab ist mit dem ersten Ende in einer zur axialen Außenseite hin offenen Aufnahme der Gurtspule drehfest gehalten. Der erste Torsionsstab ist dadurch mit dem ersten Ende an der Außenseite der Gurtspule drehfest verbunden und erstreckt sich aus der Aufnahme koaxial in axialer Richtung von der Gurtspule nach außen.

Wenigstens ein zweiter Torsionsstab ist koaxial und in Reihe zu der Gurtspule, zwischen dem ersten Torsionsstab und dem Profilkopf angeordnet. Durch das Vorsehen des zweiten Torsionsstabes kann je nach der Art der Aktivierung ein höheres oder auch ein niedrigeres Kraftbegrenzungsniveau des kraftbegrenzten Gurtbandauszuges verwirklicht werden.

Dabei weisen der zweite und der erste Torsionsstab unterschiedliche plastische Verformungsgrenzen auf, so dass durch eine sukzessive Aktivierung der beiden Torsionsstäbe ein stufenförmiger Verlauf der Kraftbegrenzungscharakteristik verwirklicht werden kann.

Dabei ist ein Drehmomentrohr vorgesehen, welches über eine schaltbare zweite Blockiereinrichtung gegenüber der Gurtspule drehfest festgelegt ist, wobei das Drehmomentrohr die beiden einander zugewandten Enden des ersten Torsionsstabes und des zweiten Torsionsstabes drehfest miteinander verbindet. Durch das Drehmomentrohr kann der erste Torsionsstab bewusst zu einer Aktivierung des zweiten Torsionsstabes in einer ersten Phase der Kraftbegrenzung überbrückt werden. Der erste Torsionsstab wird dann durch das Schalten der zweiten Blockiereinrichtung aktiviert.

An der Gurtspule ist ein axial vorstehender Fortsatz vorgesehen, gegenüber dem das Drehmomentrohr über die schaltbare zweite Blockiereinrichtung festgelegt ist. Durch den axial vorstehenden Fortsatz wird an der Gurtspule eine Kraftübertragungsfläche geschaffen, an der sich das Drehmomentrohr abstützt. Aufgrund der Anordnung des Fortsatzes wird dadurch insbesondere eine Kraftübertragungsfläche geschaffen, welche den Außendurchmesser der Gurtspule nicht vergrößert, und die koaxiale Reihenanordnung der Torsionsstäbe zu der Gurtspule kann konstruktiv besonders einfach verwirklicht werden.

Dabei ist der axiale Fortsatz bevorzugt ringförmig ausgebildet, und das Drehmomentrohr kann radial innen in den axialen ringförmigen Fortsatz hineinragen oder den axialen ringförmigen Fortsatz radial außen umfassen. Das Drehmomentrohr findet dadurch zusätzlich eine Abstützung in Radialrichtung und wird insbesondere nach dem Schalten und Lösen der zweiten Blockiereinrichtung bei der Ausführung der Drehbewegung radial an dem Fortsatz gelagert.

Weiter wird vorgeschlagen, dass an dem Profilkopf ein axial vorstehender Ringfortsatz vorgesehen ist, und das Drehmomentrohr radial innen in den Ringfortsatz hineinragt oder den Ringfortsatz radial außen umfasst. Die vorgeschlagene Lösung ist insofern von Vorteil, da das Drehmomentrohr über den Ringfortsatz eine Abstützung an dem Profilkopf findet und bei der Ausführung einer Relativdrehbewegung an dem Profilkopf gelagert ist. Dies ist insbesondere aufgrund der durch die erfindungsgemäße Lösung bedingten vergrößerten axialen Baulänge des Gurtaufrollers von Vorteil.

Weiter wird vorgeschlagen, dass die Gurtspule als Vollwelle ausgebildet ist. Durch die Ausbildung als Vollwelle kann ein besonders kompakter Aufbau bei einer gleichzeitig sehr hohen Formsteifigkeit der Gurtspule verwirklicht werden. Dabei können z.B. zur Ankopplung des Gurtbandes entsprechende Formschlussgestaltungen in der Gurtspule vorgesehen sein, jedenfalls kann der bisher zur Anordnung des Torsionsstabes erforderliche Hohlraum entfallen. Ferner kann durch die Ausbildung der Gurtspule als Vollwelle die axiale Aufnahme zur drehfesten Festlegung des ersten Endes des ersten Torsionsstabes besonders einfach verwirklicht werden.

Die Erfindung wird im Folgenden anhand bevorzugter Ausführungsformen unter Bezugnahme auf die beigefügten Figuren erläutert. Dabei zeigt
- Fig. 1: einen Gurtaufroller mit verschiedenen Zusatzbaugruppen in Schnittdarstellung, und
- Fig. 2: den Gurtaufroller mit der Kraftbegrenzungseinrichtung.

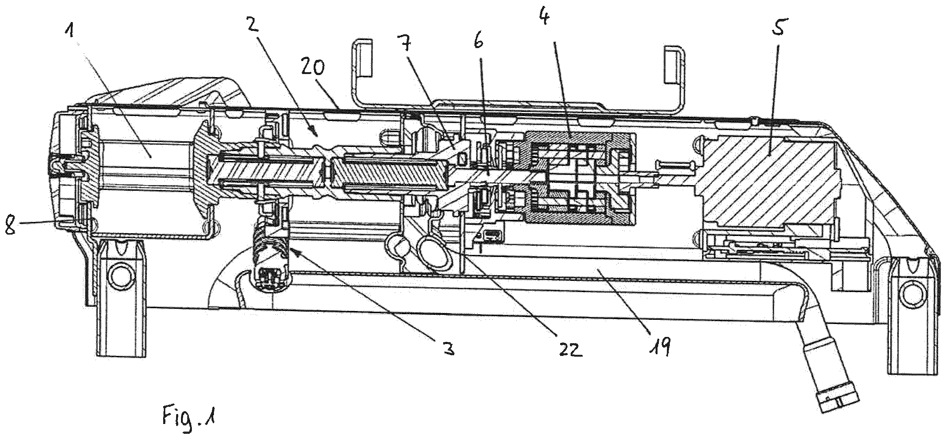

In der Figur 1 ist ein Gurtaufroller mit einer drehbar in einem Rahmen 8 gelagerten Gurtspule 1 zu erkennen, welcher mit verschiedenen weiteren Zusatzbaugruppen versehen ist. So ist eine Kraftbegrenzungseinrichtung 2, ein Elektromotor 5, ein Getriebe 4 und eine irreversible pyrotechnische Straffeinrichtung 19 vorgesehen. Der Gurtaufroller ist mit dem Rahmen 8 und der darin gelagerten Gurtspule 1 zusammen mit den weiteren Zusatzbaugruppen in einem übergeordneten Gehäuse 20 gehaltert. Das Gehäuse 20 dient ferner zur Befestigung des Gurtaufrollers in einer Rückenlehne eines Fahrzeugsitzes oder auch in einem länglichen Bauraum einer Fahrzeugstruktur. Der Elektromotor 5 ist für eine reversible Gurtstraffung und verschiedene andere Komfortfunktionen, wie z.B. als Aufwickelhilfe, als Federverstellung oder auch als Gurtwarner vorgesehen. Die Antriebsdrehbewegung des Elektromotors 5 wird dabei über das Getriebe 4 übersetzt und über einen Transferstab 6 auf die Kraftbegrenzungseinrichtung 2 übertragen, welche dann ihrerseits die Gurtspule 1 antreibt.

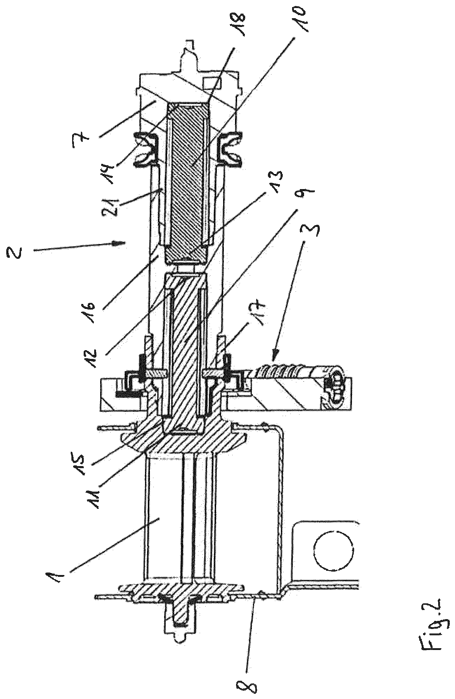

In der Figur 2 ist der Gurtaufroller mit der Gurtspule 1 und der Kraftbegrenzungseinrichtung 2 vergrößert zu erkennen. Der Rahmen 8 stützt sich an dem Gehäuse 20 ab, welches in der am Fahrzeug bzw. am Sitz befestigten Stellung ein fahrzeugfestes Widerlager für den Rahmen 8 bildet. Die Kraftbegrenzungseinrichtung 2 ist in einer zu der Drehachse der Gurtspule 1 koaxialen Ausrichtung an der Stirnseite der Gurtspule 1 angeordnet und mit der Gurtspule 1 verbunden.

Die Kraftbegrenzungseinrichtung 2 umfasst einen ersten Torsionsstab 9, einen zweiten Torsionsstab 10, einen Profilkopf 7 und eine zweite schaltbare Blockiereinrichtung 3. Der Profilkopf 7 ist Träger einer nicht gezeigten Blockierklinke, welche eine erste Blockiereinrichtung bildet und den Profilkopf 7 bei einer Ansteuerung von einer gurtbandauszugsbeschleunigungssensitiven Sensoreinrichtung und/oder einer fahrzeugbeschleunigungssensitiven Sensoreinrichtung in Auszugsrichtung eines auf der Gurtspule 1 aufgewickelten ebenfalls nicht dargestellten Sicherheitsgurtes blockiert. Die Gurtspule 1 ist in dem Rahmen 8 drehbar gelagert, der wiederum drehfest in dem Gehäuse 20 festgelegt und darüber an dem Fahrzeug bzw. in der Rückenlehne befestigbar ist. Der Profilkopf 7 ist axial beabstandet in einem in dem Gehäuse 20 befestigten Steg 22 radial gelagert. Damit sind die Gurtspule 1 und der Profilkopf 7 in Abkehr des bisher verwendeten Grundprinzips unabhängig voneinander und axial beabstandet zueinander gelagert. Damit weisen die Gurtspule 1 in dem Rahmen 8 und der Profilkopf 7 in dem Steg 22 separate und axial beabstandete Radiallagerungen auf. Dadurch kann die Baugruppe aus der Gurtspule 1 und der Kraftbegrenzungseinrichtung 2 insgesamt stabiler gelagert werden, was insbesondere während der Aktivierung der Kraftbegrenzungseinrichtung 2 von Vorteil ist.

Die Gurtspule 1 weist eine profilierte Aufnahme 15 auf, welche axial zu der Außenseite hin offen ist. Der erste Torsionsstab 9 ist mit seinem ersten Ende 11 in der Aufnahme 15 drehfest festgelegt und weist dazu eine zu dem Profil der Aufnahme 15 korrespondierendes Außenprofil auf. Die Aufnahme 15 ist umfasst von einem ringförmigen sich in Axialrichtung von der Stirnseite der Gurtspule 1 weg erstreckenden Fortsatz 17. Weiter ist ein Drehmomentrohr 16 vorgesehen, welches in den Fortsatz 17 eingreift und den ersten Torsionsstab 9 umfasst. Das Drehmomentrohr 16 ist über die schaltbare zweite Blockiereinrichtung 3 über zwei Blockierklinken drehfest mit dem Fortsatz 17 verbunden, wobei das Lösen der Blockierklinken nach dem in der DE 199 27 427 A1 beschriebene Schaltprinzip erfolgt.

Das Drehmomentrohr 16 dient gleichzeitig zu einer drehfesten Verbindung des zweiten profilierten Endes 12 des ersten Torsionsstabes 9 mit dem ersten profilierten Ende 13 des zweiten Torsionsstabes 10. Dazu weist das Drehmomentrohr 16 einen Mittenabschnitt mit radial einwärts gerichteten Vorsprüngen auf, mit denen es in Außenprofilierungen des zweiten Endes 12 des ersten Torsionsstabes 9 und des ersten Endes 13 des zweiten Torsionsstabes 10 eingreift und dadurch beide Enden drehfest miteinander verbindet.

Der Profilkopf 7 weist ebenfalls eine zentrale profilierte Aufnahme 18 auf, welche von einem sich in axialer Richtung erstreckenden Ringfortsatz 21 umfasst ist. Das zweite Ende 14 des zweiten Torsionsstabes 10 ist mit einem der Profilierung der Aufnahme 18 korrespondierenden Außenprofil versehen und darüber drehfest in der Aufnahme 18 gegenüber dem Profilkopf 7 festgelegt. Ferner umfasst das Drehmomentrohr 16 den Ringfortsatz 21 radial außen und stützt sich darüber an dem Profilkopf 7 ab. Da der Profilkopf 7 seinerseits separat von der Gurtspule 1 gelagert ist, bildet dieser dabei ein rahmenfestes Widerlager für das Drehmomentrohr 16.

Zur Aktivierung der Kraftbegrenzungseinrichtung 2 wird der Profilkopf 7 in einem ersten Schritt bei einem Überschreiten einer vorbestimmten Gurtbandauszugsbeschleunigung oder Fahrzeugverzögerung über die erste Blockiereinrichtung fahrzeugfest blockiert, wobei das Überschreiten der vorbestimmten Grenzwerte mittels der oben beschriebene Sensoreinrichtungen detektiert wird.

Sofern sich der Insasse trägheitsbedingt im Unfall nun nach vorne bewegt, wird der Sicherheitsgurt ausgezogen, und die Rückhaltekraft also die Zugkraft in dem Sicherheitsgurt steigt an. Dadurch dreht die Gurtspule 1 in Auszugsrichtung des Sicherheitsgurtes bis die weitere Drehbewegung über die Blockierung des Profilkopfes 7 blockiert wird. Nachfolgend ist ein weiterer Gurtbandauszug nur dann möglich, wenn eine solche durch eine plastische Verformung der beiden Torsionsstäbe 9 und 10 ermöglicht wird.

Vor dem Schalten der zweiten Blockiereinrichtung 3 ist das Drehmomentrohr 16 drehfest mit der Gurtspule 1, dem Fortsatz 17, dem zweiten Ende 12 des ersten Torsionsstabes 9 und dem ersten Ende 13 des zweiten Torsionsstabes 10 verbunden, so dass der erste Torsionsstab 9 aus dem Kraftfluss ausgekoppelt ist. Damit wird in dieser Phase der zweite Torsionsstab 10 plastisch um seine Längsachse verformt, wenn die Auszugskraft des Sicherheitsgurtes die durch das Kraftbegrenzungsniveau des zweiten Torsionsstabes 10 definierte Auszugskraft übersteigt. Der zweite Torsionsstab 10 weist ein höheres Kraftbegrenzungsniveau als der erste Torsionsstab 9 auf, so dass in dieser Phase der Kraftbegrenzung ein hohes Kraftbegrenzungsniveau wirkt. Das Drehmomentrohr 16 dreht in diesem Fall gegenüber dem blockierten Profilkopf 7 und ist dabei auf dem Ringfortsatz 21 des Profilkopfes 7 gelagert.

Durch das Schalten der zweiten Blockiereinrichtung 3 wird die Verbindung des Drehmomentrohres 16 mit dem Fortsatz 17 aufgehoben. Damit befindet sich der erste Torsionsstab 9 anschließend im Kraftfluss. Da der erste Torsionsstab 9 ein niedrigeres Kraftbegrenzungsniveau als der zweite Torsionsstab 10 aufweist, wirkt der zweite Torsionsstab 10 als ein Festlager, und das zweite Ende 12 des ersten Torsionsstabes 9 ist aufgrund der Verbindung mit dem ersten Ende 13 des zweiten Torsionsstabes 10 über das Drehmomentrohr 16 ebenfalls blockiert. Dadurch dreht das erste Ende 11 des ersten Torsionsstabes 9 gegenüber dem blockierten zweiten Ende 12 und der erste Torsionsstab 9 wird plastisch um seine Längsachse verformt. Dabei wirkt nun das niedrigere Kraftbegrenzungsniveau. Das Drehmomentrohr 16 ist in diesem Fall durch die formschlüssige Verbindung mit dem ersten Ende 13 des zweiten Torsionsstabes 10 blockiert, und die Gurtspule 1 dreht gegenüber dem Drehmomentrohr 16, und der Fortsatz 17 der Gurtspule 1 bildet zusätzlich ein Lager für das Drehmomentrohr 16.

Die Erfindung wurde anhand einer Kraftbegrenzungseinrichtung 2 mit zwei Torsionsstäben 9 und 10 beschrieben, welche einen gestuften Kraftbegrenzungsverlauf ermöglichen. Die beiden Torsionsstäbe 9 und 10 sind koaxial und in Reihe angeordnet, so dass durch ihre Anordnung der Außendurchmesser nicht vergrößert wird. Der Gurtaufroller wird dadurch lediglich geringfügig länger.

## Patentansprüche

1. Gurtaufroller umfassend
- eine drehbar in einem Rahmen gelagerte Gurtspule (1), und
- eine Kraftbegrenzungseinrichtung (2) mit wenigstens einem plastisch verformbaren ersten Torsionsstab (9), wobei
- der erste Torsionsstab (9) ein erstes mit der Gurtspule (1) drehfest verbundenes Ende (11) und ein zweites drehfest mit einem über eine erste Blockiereinrichtung fahrzeugfest blockierbaren Profilkopf (7) verbundenes Ende (12) aufweist, wobei
- die Gurtspule (1), der erste Torsionsstab (9) und der Profilkopf (7) koaxial und in Reihe zueinander angeordnet sind, wobei
- der erste Torsionsstab (9) mit dem ersten Ende (11) in einer zur axialen Außenseite hin offenen Aufnahme (15) der Gurtspule (1) drehfest gehalten ist, wobei
- wenigstens ein zweiter Torsionsstab (10) koaxial und in Reihe zu der Gurtspule (1), zwischen dem ersten Torsionsstab (9) und dem Profilkopf (7) angeordnet ist, wobei
- der zweite und der erste Torsionsstab (9,10) unterschiedliche plastische Verformungsgrenzen aufweisen, **dadurch gekennzeichnet, dass**
- ein Drehmomentrohr (16) vorgesehen ist, welches über eine schaltbare zweite Blockiereinrichtung (3) gegenüber der Gurtspule (1) drehfest festgelegt ist, wobei
- das Drehmomentrohr (16) die beiden einander zugewandten Enden (12,13) des ersten Torsionsstabes (9) und des zweiten Torsionsstabes (10) drehfest miteinander verbindet, und
- an der Gurtspule (1) ein axial vorstehender Fortsatz (17) vorgesehen ist, gegenüber dem das Drehmomentrohr (16) über die schaltbare zweite Blockiereinrichtung (3) festgelegt ist, und
- der axiale Fortsatz (17) ringförmig ist, und
- das Drehmomentrohr (16) radial innen in Ringfortsatz (21) hineinragt oder den Ringfortsatz (21) radial außen umfasst.

2. Gurtaufroller nach Anspruch 1, **dadurch gekennzeichnet,**
**dass**
- der erste Torsionsstab (9) in Reihe zwischen der Gurtspule (1) und dem Profilkopf (7) angeordnet ist.

3. Gurtaufroller nach Anspruch 2, **dadurch gekennzeichnet,**
**dass**
- der Profilkopf (7) und die Gurtspule (1) in einem axialen Abstand zueinander in separaten Radiallagerungen gelagert sind.

4. Gurtaufroller nach einem der Ansprüche 1 bis 3, **dadurch gekennzeichnet, dass**
- an dem Profilkopf (7) ein axial vorstehender Ringfortsatz (21) vorgesehen ist, und
- das Drehmomentrohr (16) radial innen in den Ringfortsatz (21) hineinragt oder den Ringfortsatz (21) radial außen umfasst.

5. Gurtaufroller nach einem der Ansprüche 1 bis 4, **dadurch gekennzeichnet, dass**
- die Gurtspule (1) als Vollwelle ausgebildet ist.

## Claims

1. Belt retractor comprising
- a belt reel (1) rotatably mounted in a frame, and
- a force-limiting device (2) having at least one plastically deformable first torsion rod (9),
- the first torsion rod (9) having a first end (11) rotationally fixed to the belt reel (1) and a second end (12) rotationally fixed to a profiled head (7) which can be blocked via a first blocking device in a fixed manner relative to the vehicle,
- the belt reel (1), the first torsion rod (9) and the profiled head (7) being arranged coaxially to one another and in series relative to one another,
- the first torsion rod (9) being held in a rotationally fixed manner with the first end (11) in a receptacle (15) of the belt reel (1) that is open toward the axial outer side,
- at least one second torsion rod (10) being arranged coaxially and in series with the belt reel (1) between the first torsion rod (9) and the profiled head (7), - the second and the first torsion rod (9,10) having different plastic deformation limits, **characterized in that**
- a torque tube (16) is provided which is fixed in relation to the belt reel (1) in a rotationally fixed manner via a switchable second blocking device (3),
- the torque tube (16) connecting the two mutually facing ends (12,13) of the first torsion rod (9) and the second torsion rod (10) to one another in a rotationally fixed manner, and
- an axially projecting protrusion (17) being provided on the belt reel (1), in relation to which the torque tube (16) is fixed via the switchable second blocking device (3), and
- the axial protrusion (17) being annular, and
- the torque tube (16) projecting radially inwardly into annular protrusion (21) or surrounding the annular protrusion (21) radially on the outside.

2. Belt retractor according to claim 1, **characterized in that**
- the first torsion rod (9) is arranged in series between the belt reel (1) and the profiled head (7).

3. Belt retractor according to claim 2, **characterized in that**
- the profiled head (7) and the belt reel (1) are mounted at an axial distance from one another in separate radial bearings.

4. Belt retractor according to any of claims 1 to 3, **characterized in that**
- an axially projecting annular protrusion (21) is provided on the profiled head (7), and
- the torque tube (16) projects radially inwardly into the annular protrusion (21) or surrounds the annular protrusion (21) radially on the outside.

5. Belt retractor according to any of claims 1 to 4, **characterized in that**
- the belt reel (1) is designed as a solid shaft.

## Revendications

1. Enrouleur de ceinture comprenant
- une bobine de ceinture (1) montée de manière à pouvoir tourner dans un cadre, et
- un dispositif de limitation de force (2) comportant au moins une première tige de torsion (9) déformable plastiquement, dans lequel
- la première tige de torsion (9) présente une première extrémité (11) reliée de manière solidaire en rotation à la bobine de ceinture (1) et une seconde extrémité (12) reliée de manière solidaire en rotation à une tête profilée (7) pouvant être bloquée de manière à être solidaire du véhicule par l'intermédiaire d'un premier dispositif de blocage, dans lequel
- la bobine de ceinture (1), la première tige de torsion (9) et la tête profilée (7) sont disposés de manière coaxiale et en série les unes par rapport aux autres, dans lequel
- la première tige de torsion (9) est maintenue de manière solidaire en rotation par la première extrémité (11) dans un logement (15) de la bobine de ceinture (1) ouvert vers le côté extérieur axial, dans lequel
- au moins une seconde tige de torsion (10) est disposée de manière coaxiale et en série par rapport à la bobine de ceinture (1), entre la première tige de torsion (9) et la tête profilée (7), dans lequel
- la seconde et la première tige de torsion (9, 10) présentent des limites de déformation plastique différentes, **caractérisé en ce que**
- un tube de couple (16) est prévu, lequel est fixé de manière solidaire en rotation par rapport à la bobine de ceinture (1) par l'intermédiaire d'un second dispositif de blocage (3) commutable, dans lequel
- le tube de couple (16) relie entre elles et de manière solidaire en rotation les deux extrémités (12, 13) tournées l'une vers l'autre de la première tige de torsion (9) et de la seconde tige de torsion (10), et
- un prolongement (17) faisant saillie axialement est prévu sur la bobine de ceinture (1), par rapport auquel le tube de couple (16) est fixé par l'intermédiaire du second dispositif de blocage (3) commutable, et
- le prolongement (17) axial est annulaire, et
- le tube de couple (16) pénètre radialement à l'intérieur dans le prolongement annulaire (21) ou entoure le prolongement annulaire (21) radialement à l'extérieur.

2. Enrouleur de ceinture selon la revendication 1, **caractérisé en ce que**
- la première tige de torsion (9) est disposée en série entre la bobine de ceinture (1) et la tête profilée (7).

3. Enrouleur de ceinture selon la revendication 2, **caractérisé en ce que**
- la tête profilée (7) et la bobine de ceinture (1) sont montées à une certaine distance axiale l'une de l'autre dans des paliers radiaux séparés.

4. Enrouleur de ceinture selon l'une des revendications 1 à 3,
**caractérisé en ce que**
- un prolongement annulaire (21) faisant saillie axialement est prévu sur la tête profilée (7), et
- le tube de couple (16) pénètre radialement à l'intérieur dans le prolongement annulaire (21) ou entoure le prolongement annulaire (21) radialement à l'extérieur.

5. Enrouleur de ceinture selon l'une des revendications 1 à 4,
**caractérisé en ce que**
- la bobine de ceinture (1) est conçue comme un arbre plein.
